# EUROPÄISCHE PATENTSCHRIFT

(11) **EP 1 561 935 B1**
(45) Veröffentlichungstag und Bekanntmachung des Hinweises auf die Patenterteilung: **05.05.2010**
(21) Anmeldenummer: 05405003.4
(22) Anmeldetag: 06.01.2005
(51) Int. Cl.: F02D 41/26, F02D 41/22, F02D 41/38, F02D 41/34

(54) **Dieselmaschine, insbesondere Grossdieselmotor, mit einem elektronischen Steuerungssystem**
Large diesel engine with electronic control unit
Gros moteur diesel avec unité de contrôle électronique

(30) Priorität: 05.02.2004 EP 04405073
(43) Veröffentlichungstag der Anmeldung: 10.08.2005
(73) Patentinhaber: Wärtsilä Schweiz AG, 8401 Winterthur (CH)
(72) Erfinder: Fankhauser, Stefan, 8542 Wiesendangen (CH)
(74) Vertreter: Sulzer Management AG

(56) Entgegenhaltungen:
- EP-A- 0 989 297
- WO-A-98/28530
- DE-A- 19 745 765
- US-A- 5 775 296
- PATENT ABSTRACTS OF JAPAN Bd. 2003, Nr. 11, 5. November 2003 (2003-11-05) & JP 2003 201909 A (MITSUBISHI HEAVY IND LTD; NABCO LTD), 18. Juli 2003 (2003-07-18)

## Beschreibung

Die Erfindung betrifft eine Dieselmaschine, insbesondere einen Grossdieselmotor, mit einem elektronischen Steuerungssystem gemäss Oberbegriff von Anspruch 1 sowie eine Verwendung der Dieselmaschine. Der Grossdieselmotor kann sowohl ein Zweitakt- als auch ein Viertakt-Dieselmotor sein.

Aus der EP-A- 0 989 297 ist ein Grossdieselmotor mit einem elektronischen Steuerungssystem bekannt, das mehrere elektronische Module umfasst. Um beispielsweise die Brennstoffzufuhr und den Gaswechsel in Zylindern der Maschine zu regeln, ist jeweils ein Modul einem Zylinder zugeordnet (wobei anstelle eines Moduls auch zwei oder eine Gruppe von zusammen arbeitenden Modulen vorliegen können). Mit diesen Modulen, deren Logikschaltungen identisch ausgebildet sind, wird jeweils eine Gesamtheit von Funktionen, die den zugeordneten Zylinder betreffen, steuernd beeinflusst. Neben solchen lokalen, auf die Zylinder bezogenen Funktionen gibt es auch globale, den gesamten Motor betreffende Funktionen. Für die entsprechende globale Motorsteuerung werden weitere Module eingesetzt, die sich von den Modulen für die lokalen Steuerungen unterscheiden.

Wird der Grossdieselmotor insbesondere als Antrieb eines Hochseeschiffs verwendet, so ist es notwendig, dass bei Versagen einzelner Teile des Steuerungssystem oder Komponenten des Motors zumindest noch ein Teil der Motorleistung weiter zur Verfügung steht. Dazu muss die globale Motorsteuerung in ausreichendem Mass funktionstüchtig bleiben. Einzelne Zylinder können ausfallen, da die Maschine bei einem solchen Ausfall mit einer reduzierten Leistung weiter betreibbar ist. Einen permanent durchführbaren Betrieb der Maschine erreicht man, indem man diese in redundanter Weise steuert und auch bei den mechanischen Bestandteilen eine Redundanz durch mehrfachen Einbau einzelner Komponenten herstellt. Zu einer Hauptsteuerung, mit der die globale Motorsteuerung aktiv betrieben wird, lässt man simultan eine zweite, identische Steuerung laufen, die bezüglich der globalen Motorsteuerung passiv bleibend mitarbeitet, die aber im Bedarfsfall ohne Verzug in den aktiven Steuerungszustand umgeschaltet werden kann. Während für die lokale Steuerung nur je ein elektronisches Modul (oder auch eine Gruppe von zusammen arbeitenden Modulen) pro Zylinder vorgesehen ist, ist es bezüglich den globalen Funktionen mit deren elektronischen Systemkomponenten erforderlich, dass mindestens ein zweites Mal die gleichen Systemkomponenten im Steuerungssystem enthalten sind; dabei ist unter "Systemkomponente" ein Modul oder eine Gruppe von Modulen zu verstehen.

Aufgabe der Erfindung ist es, einen Grossdieselmotor zu schaffen, der eine elektronisch gesteuerte Dieselmaschine ist, bei der das Steuerungssystem für den Gesamtmotor und die einzelnen Zylinder unter Verwendung einer minimalen Anzahl an elektronischen Systemkomponenten aus diesen zusammensetzbar ist. Eine minimale Anzahl ist aus Gründen verringerter Kosten und erhöhter Zuverlässigkeit vorteilhaft. Diese Aufgabe wird durch die im Anspruch 1 definierte Maschine gelöst.

Die Dieselmaschine, die insbesondere ein Grossdieselmotor ist, weist ein elektronisches Steuerungssystem auf. Diese Maschine ist ein mehrere Zylinder umfassender Motor, bei dem durch das Steuerungssystem lokale, die Zylinder betreffende Funktionen und globale, den gesamten Motor betreffende Funktionen beeinflussbar sind. Jeder Zylinder ist einem Modul des Steuerungssystems zugeordnet. Jeder dieser Steuerungsmodule umfasst eine identisch ausgebildete Logikschaltung mit einem ersten und einem zweiten Funktionsteilbereich. Mit dem ersten Funktionsteilbereich ist der zugeordnete Zylinder steuerbar. Die globalen Funktionen sind durch eine auf die Module verteilte Steuerung beeinflussbar, nämlich so, dass für mindestens einen Teil der Module mit jeweils dem zweiten Funktionsteilbereich in Zusammenspiel mit zweiten Funktionsteilbereichen der weiteren Module die globale Motorsteuerung in einer redundanten Weise durchführbar ist. Aufgrund der Redundanz bleibt im Fehlerfall zumindest ein Teil der Motorleistung aufrecht erhalten.

Die abhängigen Ansprüche 2 bis 9 betreffen vorteilhafte Ausführungsformen der erfindungsgemässen Maschine. Eine Verwendung der erfindungsgemässen Maschine ist Gegenstand des Anspruchs 10.

Nachfolgend wird die Erfindung anhand der Zeichnungen erläutert. Es zeigen:
- Fig. 1: einen zentralen Ausschnitt eines Grossdieselmotors, im Speziellen eines Zweitakt-Dieselmotors,
- Fig. 2: ein stark vereinfachtes Schema eines Steuerungssystems, mit dem der Dieselmotor der Fig. 1 gemäss der Erfindung steuerbar ist, und
- Fig. 3: ein zweites Steuerungssystem zu einem erfindungsgemässen Dieselmotor.

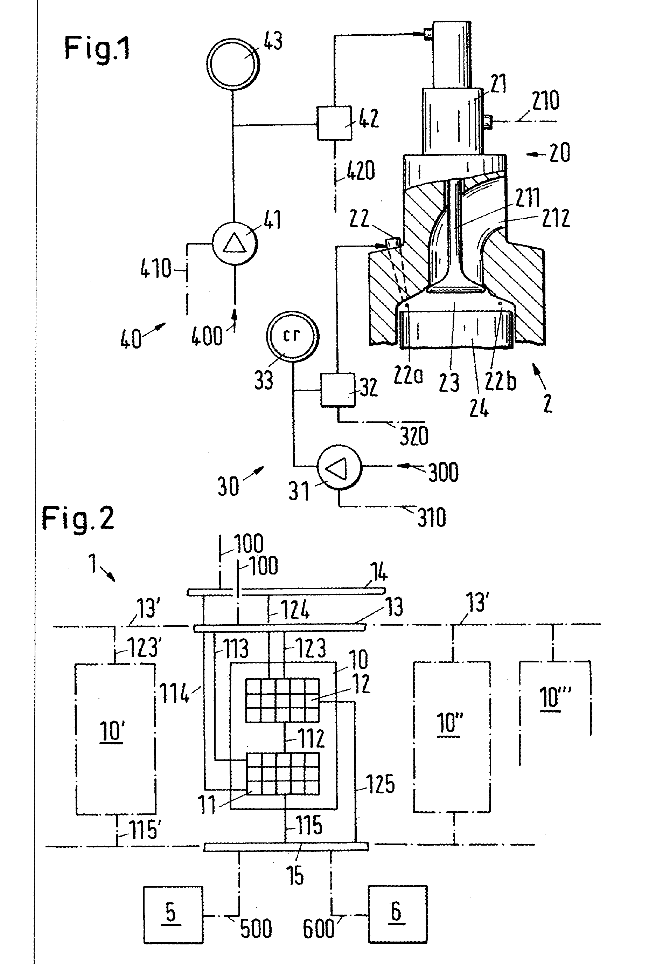

Die erfindungsgemässe Maschine mit einem in Fig. 2 dargestellten elektronischen Steuerungssystem 1 ist ein mindestens vier Zylinder 2 umfassender Motor. Module 10, 10', 10" und 10"' des Steuerungssystems sind mit Komponenten des Motors zwecks Signalübermittlungen verbunden, wobei jeder Modul 10 einem Zylinder 2 zugeordnet ist. Die beim Beispiel des in Fig. 1 dargestellten Motors (Zweitakt-Grossdieselmotor) auftretenden Komponenten sind:
ein Gaswechselsystem 20 mit Gaswechselventil 21, Ventilkörper 211 und Kanal 212, durch den Luft zuführbar und Verbrennungsgase abführbar sind; ein Einspritzsystem 30 zum volumetrischen oder zeitgesteuerten Einspeisen von flüssigem Brennstoff 300, der durch ein gesteuertes Einspritzorgan 32 und Düsen 22 (Düsenspitzen 22a, 22b) in einen Verbrennungsraum 23 zwischen dem Ventilkörper 211 und einem Kolben 24 einspritzbar ist; Pumpen 31, 41 zum Zuführen des Brennstoffs 300 bzw. eines Steuermediums 400, das durch ein gesteuertes Einspeiseorgan 42 in das Gaswechselventil 21 förderbar ist;
ein Akkumulator 43 für das Steuermedium 400 und ein Akkumulator 33 für den Brennstoff 300, ein sogenanntes "Common Rail" (cr in Fig. 1), wobei diese Akkumulatoren 33 und 43 einerseits mit den Pumpen 31 bzw. 41 und andererseits mit den Einspritzsystemen 30 bzw. den Gaswechselsystemen 20 aller Zylinder 2 verbunden sind.

Die Pumpen 31, 41 und Organe 32, 42 sind über signalübermittelnde Verbindungen 310, 410, 320 bzw. 420 an das Steuerungssystem 1 angeschlossen. In der Darstellung des Steuerungssystems 1 der Fig. 2 ist nur eine Anschlussleitung 100 eingezeichnet, die stellvertretend für die genannten Verbindungen 310, 410, 320 sowie 420 und viele andere nicht genannte Verbindungen angegeben ist. Eine weitere Verbindung 210, die auch noch dargestellt ist, führt zu einem Sensor des Gaswechselventils 21.

Zusätzliche, nicht dargestellte Komponenten des Motors sind:
ein hydraulisches System mit Organen zur Durchführung des Einspritzens sowie des Gaswechsels;
Winkelerfassung zur Synchronisation der lokalen und globalen Funktionen mit der Drehung einer vom Motor angetriebenen Welle; und
Vorrichtungen zum Regeln der Brennstoffzufuhr sowie des Gaswechsels und zur Steuerung einer Startluftzufuhr.

In der erfindungsgemässen Maschine sind durch das Steuerungssystem 1 lokale, die Zylinder 2 betreffende Funktionen und globale, den gesamten Motor betreffende Funktionen beeinflussbar. Jeder Zylinder 2 ist einem Modul 10 bzw. einem der strichpunktiert angedeuteten Module 10', 10", 10''' des Steuerungssystems 1 zugeordnet. Jeder dieser Steuerungsmodule 10, 10', 10", 10''' umfasst eine identisch ausgebildete Logikschaltung mit einem ersten Funktionsteilbereich 11 und einem zweiten Funktionsteilbereich 12. Mit dem ersten Funktionsteilbereich 11 ist der zugeordnete Zylinder 2 steuerbar. Die zweiten Funktionsteilbereiche 12 sind hinsichtlich den globalen Funktionen eingerichtet. Die beiden Funktionsteilbereiche 11 und 12 bilden mit Vorteil zusammen eine einzige Logikschaltung, die nicht in modulartigeTeileinheiten trennbar ist.

Zwischen den Funktionsteilbereichen 11 und 12 bestehen Verbindungen. Diese sind der Einfachheit halber durch eine einzige Linie 112 dargestellt.

Dies gilt auch für weitere Linien 113, 114, 123 und 124 für Verbindungen, durch welche die Funktionsteilbereiche 11 und 12 an Busleitungsysteme 13 und 14 angeschlossen sind. Die Busleitungsysteme 13, 14 stellen die Verbindungen auf eine redundante Weise her. Beim Modul 10' sind Anschlüsse an die Busleitungsysteme 13 und 14 noch weiter vereinfacht durch zwei Linien 123' und 114' dargestellt. Alle Module 10 haben ausser Anschlussstellen, an denen die Verbindungen zu den Busleitungsysteme 13, 14 angeschlossen sind, Anschlussstellen für ein drittes Busleitungsystem 15 (und entsprechenden Verbindungen 115, 125 und 115') sowie zusätzlich "diskrete Ausgänge", an die weitere Komponenten anschliessbar sind (nicht dargestellt).

Alle Module 10 sind mit einem identischen Betriebsprogramm ausgestattet. Die Integrierung der Module 10 im Steuerungssystem 1 wird durch Verbindungskabel mit Steckern hergestellt, wobei die Funktionalitäten der einzelnen Module 10 sich durch diese Verbindungen ergeben. Durch das Einstecken der Stecker an den für sie vorgesehenen Anschlussstellen wird die Funktionalität des individuellen Moduls 10 durch das Betriebsprogramm erkannt und aktiviert.

Bei dem in der Fig. 2 gezeigten Steuerungssystem 1 wird der zweite Funktionsteilbereich 12 des Moduls 10 mit dem entsprechenden zweiten Funktionsteilbereich 12 (nicht dargestellt) eines weiteren Moduls 10' gepaart; und mit diesem Paar wird eine globale Motorsteuerung betrieben. Zwei weitere Module, beispielsweise die Module 10" und 10"', sind ebenfalls als ein derartiges Paar von zweiten Funktionsteilbereichen 12 vorgesehen. Die globale Motorsteuerung lässt sich so in einer redundanten Weise durch ein simultanes Betreiben der beiden Paare durchführen.

Alle Steuerungsmodule 10, 10', 10", 10''' sind gleich. Verbindungen zu Signaleingängen sowie -ausgängen sind zumindest zu einem Teil über die redundanten Busleitungsysteme 13, 14 hergestellt (strichpunktierte Leitung 13' ist Fortsetzung der Leitung 13). Zur Integrierung der Module 10 im Steuerungssystem 1 sind weitere elektronische Schaltungen nicht erforderlich.

Die beiden Paare von zweiten Funktionsteilbereichen 12 sind mit Vorteil an ihren Ausgängen gekoppelt. Mittels Komponenten der Logikschaltung sind sie gegeneinander geschützt, so dass bei einem Versagen eines der Module, beispielsweise des Moduls 10', eine Weiterführung der globalen Motorsteuerung - unbeeinträchtigt durch den versagenden Modul 10' - gewährleistet ist.

Bei Modulen 10, deren zweiter Funktionsteilbereich 12 der Logikschaltung zur globalen Motorsteuerung nicht benötigt wird, fehlen aus ökonomischen Gründen entsprechende Anschlussverbindungen 123, 124 oder Verbindungen zu diskreten Ausgängen.

Die einzelnen Module 10 sind mit Vorteil im Steuerungssystem 1 derart angeordnet und angeschlossen, dass zum Ersetzen eines defekten Moduls 10' lediglich lokale Demontageeingriffe an diesem Modul 10' durchzuführen sind. Beim Fehlen eines einzelnen Moduls bleibt das Steuerungssystem weiter arbeitsfähig.

Die Steuerungssysteme 1 der erfindungsgemässen Maschine sind insbesondere zur Verwendung auf einem Hochseeschiff vorgesehen, auf dem die Maschine eine Schiffsantriebswelle dreht.

Die Steuerungsmodule 10 weisen für diese Verwendung Signaleingänge auf, durch die sie Information unter anderem mit einem Schiffsalarmsystem, einem Sicherheitssystem und einer elektronischen Drehzahlregelung der Schiffsantriebswelle austauschen können, so dass mit dieser Information das Steuerungssystem 1 zusätzlich beeinflussbar ist. Das Schiffsalarmsystem, das Sicherheitssystem und die Drehzahlregelung, die als Beispiele genannt sind, haben in Fig. 2 eine symbolische Darstellung durch Blöcke 5 und 6, die durch Verbindungen 500 bzw. 600 an das dritte Busleitungsystem 15 angeschlossen sind.

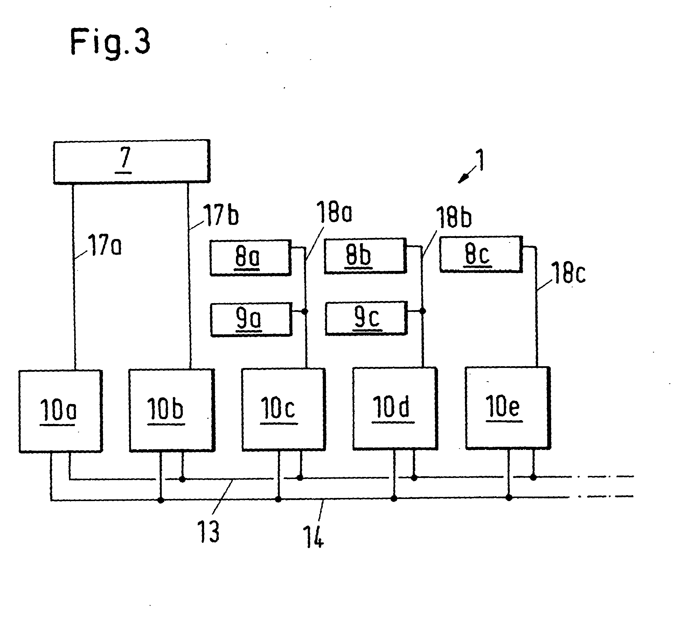

Fig. 3 zeigt ein zweites Steuerungssystem 1 zu einem erfindungsgemässen Dieselmotor. Dieses Steuerungssystem 1 umfasst - soweit es dargestellt ist - die folgenden Koponenten: Module 10a, 10b, 10c, 10d, 10e, die an die zwei Busleitungsysteme 13 und 14 angeschlossen sind; ein Block 7, der sich auf einen ersten Teil der globalen Funktionen bezieht (z.B. Schiffsalarmsystem, Sicherheitssystem, Drehzahlregelung); und Aktoren 8a, 8b, 8c und 9a, 9b (engl. "actuators"), die sich auf einen weiteren Teil der globalen Funktionen beziehen. Der Block 7 wird redundant gesteuert: über zwei Busleitungsysteme 17a, 17b (anstelle des Busleitungsystems 15) und durch ein simultanes Betreiben von zwei Modulen 10a und 10b. Bei Ausfall eines der Module 10a oder 10b erhält der Block 7 weiterhin die für die Steuerung benötigte Information.

Die Aktoren 8a, 8b, 8c und 9a, 9b sind in einer Redundanz erzeugenden Anzahl vorhanden. Sie sind über Busleitungsysteme 18a, 18b und 18c an die Module 10c, 10d bzw. 10e angeschlossen. Bei Ausfall eines Aktors wird mit den entsprechenden Modulen eine Anpassung beim Betrieb der intakten Aktoren bewirkt. Die Aktoren 8a, 8b sowie 8c sind beispielsweise drei Pumpen für ein Servo-Öl und die Aktoren 9a sowie 9b Pumpen für den Brennstoff 300, der in den Akkumulator 33 einzuspeisen ist. Bei Ausfall beispielsweise des Aktors 8a wird mit den entsprechenden Modulen 10d und 10e des Steuerungssystems 1 eine Anpassung beim Betrieb der intakten Aktoren 8b und 8c bewirkt. Es kann dabei mit zwei der drei Aktoren der Bedarf an Servo-Öl gedeckt werden, indem die Förderleistung der beiden intakten Aktoren 8b und 8c entsprechend vergössert wird. Bei Ausfall eines der den Aktoren 8a, 8b, 8c zugeordneten Module 10c, 10d oder 10e stellt der entsprechende Aktor 8a, 8b bzw. 8c ebenfalls seinen Betrieb ein, was aber dank der Redundanz dieser Aktoren 8a, 8b, 8c nicht zu einem Ausfall der gesamten Maschine führt.

## Patentansprüche

1. Dieselmaschine, insbesondere Grossdieselmotor, mit einem elektronischen Steuerungssystem (1), welche Maschine ein mehrere Zylinder (2) umfassender Motor ist, bei dem durch das Steuerungssystem lokale, die Zylinder betreffende Funktionen und globale, den gesamten Motor betreffende Funktionen beeinflussbar sind,
jeder wobei Zylinder einem Modul (10, 10', 10", 10"'; 10a, 10b, ...) des Steuerungssystems zugeordnet ist, **dadurch gekennzeichnet, dass** jeder dieser Steuerungsmodule (10) eine identisch ausgebildete Logikschaltung mit einem ersten und einem zweiten Funktionsteilbereich (11, 12) umfasst, dass mit dem ersten Funktionsteilbereich (11) der zugeordnete Zylinder steuerbar ist und dass die globalen Funktionen durch eine auf die Module verteilte Steuerung beeinflussbar sind, nämlich so, dass für mindestens einen Teil der Module mit jeweils dem zweiten Funktionsteilbereich in Zusammenspiel mit zweiten Funktionsteilbereichen der weiteren Module die globale Motorsteuerung in einer redundanten Weise durchführbar ist, wobei in einem Fehlerfall aufgrund der Redundanz zumindest ein Teil der Motorleistung aufrecht erhalten bleibt.

2. Maschine nach Anspruch 1, **dadurch gekennzeichnet, dass** die lokalen und globalen Funktionen durch ein simultanes Betreiben der Module (10, 10', 10", 10"'; 10a, 10b, ...) mit identischem Betriebsprogramm durchführbar sind.

3. Maschine nach Anspruch 1 oder 2, **dadurch gekennzeichnet, dass** für mindestens einen Teil der globalen Funktionen eine Mehrzahl von gleichen Aktoren (8a, 8b, 8c; 9a, 9b) einsetzbar sind, dass diese Aktoren in einer Redundanz erzeugenden Anzahl vorhanden sind und dass jedem dieser Aktoren jeweils nur ein Modul (10c, 10d, 10e) zugeordnet ist, wobei bei Ausfall eines Aktors mit den entsprechenden Modulen eine Anpassung beim Betrieb der intakten Aktoren bewirkbar ist.

4. Maschine nach Anspruch 1, **dadurch gekennzeichnet, dass** der zweite Funktionsteilbereich (12) der Logikschaltung eines ersten Moduls (10) gepaart mit dem entsprechenden zweiten Funktionsteilbereich eines weiteren Moduls (10') für die globale Motorsteuerung vorgesehen ist, dass zwei weitere Module (10", 10"') mit einem derartigen Paar von zweiten Funktionsteilbereichen vorgesehen sind und dass die globale Motorsteuerung in redundanter Weise durch ein simultanes Betreiben der beiden Paare (10, 10' und 10", 10"') durchführbar ist.

5. Maschine nach Anspruch 4, **dadurch gekennzeichnet, dass** die beiden Paare (10, 10' und 10", 10"') von zweiten Funktion steil bereichen (12) an ihren Ausgängen gekoppelt und mittels Komponenten der Logikschaltung gegeneinander geschützt sind, so dass bei einem Versagen eines der Module (10') eine Weiterführung der globalen Motorsteuerung - unbeeinträchtigt durch den versagenden Modul (10') - gewährleistet ist.

6. Maschine nach einem der Ansprüche 1 bis 5, **dadurch gekennzeichnet, dass** alle Steuerungsmodule (10, 10', 10", 10"') gleich sind, dass Verbindungen zu Signaleingängen sowie -ausgängen zumindest zu einem Teil über redundante Busleitungsysteme (13, 14) hergestellt sind und dass zur Integrierung der Module im Steuerungssystem (1) weitere elektronische Schaltungen nicht erforderlich sind.

7. Maschine nach einem der Ansprüche 1 bis 6, **dadurch gekennzeichnet, dass** bei Modulen (10), deren zweiter Funktionsteilbereich (12) der Logikschaltung zur globalen Motorsteuerung nicht benötigt wird, entsprechende Anschlussverbindungen (123, 124) oder Verbindungen zu diskreten Ausgängen fehlen.

8. Maschine nach einem der Ansprüche 1 bis 7, **dadurch gekennzeichnet, dass** die einzelnen Module (10) im Steuerungssystem (1) derart angeordnet und angeschlossen sind, dass zum Ersetzen eines defekten Moduls (10') lediglich lokale Demontageeingriffe an diesem Modul durchzuführen sind, und dass beim Fehlen eines einzelnen Moduls das Steuerungssystem weiter arbeitsfähig bleibt.

9. Maschine nach einem der Ansprüche 1 bis 8, **dadurch gekennzeichnet, dass** die Module (10) des Steuerungssystems (1) jeweils mit folgenden Komponenten des Motors in signalübermittelnder Verbindung (100) stehen:
- einem Einspritzsystem (30) für den zugeordneten Zylinder (2) zum Einspeisen von flüssigem Brennstoff (300),
- einem Gaswechselsystem (20) für den zugeordneten Zylinder,
- Pumpen (31, 41) zum Zuführen des Brennstoffs und eines Steuermediums (400),
- einem Akkumulator (43) für das Steuermedium und einem Akkumulator (33) für den Brennstoff, einem sogenannten "Common Rail", wobei diese Akkumulatoren mit den Pumpen, den Einspritzsystemen und den Gaswechselsystemen verbunden sind,
- einem hydraulischen System mit Organen zur Durchführung des Einspritzens und des Gaswechsels,
- Winkelerfassung zur Synchronisation der lokalen und globalen Funktionen mit der Drehung der vom Motor angetriebenen Welle, und
- Vorrichtungen zum Regeln der Brennstoffzufuhr sowie des Gaswechsels und zur Steuerung einer Startluftzufuhr.

10. Verwendung einer Maschine gemäss einem der Ansprüche 1 bis 8 auf einem Hochseeschiff zum Drehen einer Schiffsantriebswelle, wobei die Steuerungsmodule (10) Signaleingänge aufweisen, durch die sie Information unter anderem von einem Schiffsalarmsystem (5), von einem Sicherheitssystem und von einer elektronischen Drehzahlregelung (6) der Schiffsantriebswelle zur Beeinflussung des Steuerungssystems (1) empfangen können.

## Claims

1. A diesel engine, in particular a large diesel engine, with an electronic control system (1) said engine being an engine including a plurality of cylinders (2) in which local functions relating to the cylinders and global functions relating to the whole engine can be influenced by the control system, wherein each cylinder is associated with one module (10, 10', 10", 10"'; 10a, 10b,...) of the control system, **characterised in that** each of these control modules (10) includes an identically designed logic circuit with a first function part (11) and a second function part (12), **in that** the associated cylinder can be controlled with the first function part (11) and **in that** the global functions can be influenced by means of a control distributed over the modules, namely in such a manner that the global engine control can be carried out in a redundant manner for at least some of the modules with the second function part in collaboration with the second function parts of the further modules, wherein in the case of a fault at least a part of the engine power is maintained due to the redundancy.

2. An engine in accordance with claim 1 **characterised in that** the local and global functions can be carried out by means of a simultaneous operation of the modules (10, 10', 10", 10"'; 10a, 10b,...) using an identical operating programme.

3. An engine in accordance with claim 1 or claim 2, **characterised in that** a plurality of like actuators (8a, 8b, 8c;9a, 9b) can be employed for at least some of the global functions, **in that** these actuators are present in a number producing a redundancy and **in that** in each case only one module (10c, 10d, 10e) is associated with each of these actuators, wherein in the case of failure of an actuator an adaptation in the operation of the intact actuator can be achieved with the corresponding modules.

4. An engine in accordance with claim 1 **characterised in that** the second function part (12) of the logic circuit of a first module (10) paired with the corresponding second function part of a further module (10') is provided for the global engine control, **in that** two further modules (10", 10"') are provided with such a pair of second function parts and **in that** the global engine control can be carried out in redundant manner by means of a simultaneous operation of the two pairs (10, 10' and 10", 10"').

5. An engine in accordance with claim 4 **characterised in that** the two pairs (10, 10' and 10", 10"') of second function parts (12) are coupled at their outputs and protected from each other by means of components of the logic circuit, so that, on failure of one of the modules (10'), a continuation of the global engine control is guaranteed - unaffected by the failing module (10').

6. An engine in accordance with any one of the claims 1 to 5 **characterised in that** all the control modules (10, 10', 10", 10"') are the same, **in that** connections to signal inputs and outputs are established at least in part via redundant bus systems (13, 14) and **in that** further electronic circuits are not necessary for the integration of the modules in the control system (1).

7. An engine in accordance with any one of the claims 1 to 6 **characterised in that**, in modules (10) of which the second function part(12) of the logic circuit is not required for global engine control, corresponding terminal connections (123, 124) or connections to discrete outputs are missing.

8. An engine in accordance with any one of the claims 1 to 7 **characterised in that** the individual modules (10) are arranged and connected in the control system (1) in such a way that for the replacement of a defective module merely local dismantling steps are to be carried out on this module and that when a single module is missing the control system remains capable of working.

9. An engine in accordance with any one of the claims 1 to 8 **characterised in that** the modules (10) of the control system (1) are respectively in signal transmitting communication (100) with the following components of the engine:
- an injection system (30) for the associated cylinder for the feeding of liquid fuel (300),
- a gas changing system (20) for the associated cylinder,
- pumps (31, 41) for the supply of the fuel and of a control medium (400),
- an accumulator (43) for the control medium and an accumulator (33) for the fuel, a so-called "common rail" wherein these accumulators are connected to the pumps, to the injection system and to the gas changing systems,
- a hydraulic system with organs for the carrying out of the injection and of the gas changing,
- angle determination for the synchronisation of local and global functions with the rotation of the shaft driven by the engine, and devices for the regulation of the fuel supply and also of the gas-changing and for the control of a start air supply.

10. The use of an engine in accordance with any one of the claims 1 to 8, on an ocean going ship for the rotation of a ship's drive shaft, wherein the control modules (10) have signal inputs through which they can receive information from, among other things, a ship's alarm system (5), from a security system and from an electronic speed of rotation control (6) of the ship's drive shaft for influencing the control system (1).

## Revendications

1. Machine Diesel, en particulier grand moteur Diesel, avec un système de commande électronique (1), ladite machine étant un moteur comprenant plusieurs cylindres (2), dans lequel, au moyen du système de commande, on peut agir sur des fonctions concernant les cylindres et des fonctions globales concernant l'ensemble du moteur, où chaque cylindre est associé à un module (10, 10', 10", 10"'; 10a, 10b, ...) du système de commande, **caractérisée en ce que** chacun de ces modules de commande (10) comporte un circuit logique réalisé d'une manière identique avec une première et une deuxième zone partielle de fonction (11, 12), **en ce que** par la première zone partielle de fonction (11), le cylindre associé peut être commandé et **en ce que** les fonctions globales peuvent être influencées par une commande répartie sur les modules, à savoir que pour au moins une partie des modules, avec respectivement la deuxième zone partielle de fonction, en coopération avec des deuxièmes zones partielles de fonction des autres modules, la commande de moteur globale peut être exécutée d'une manière redondante, où dans un cas d'erreur, en raison de la redondance, au moins une partie de la puissance du moteur reste conservée.

2. Machine selon la revendication 1, **caractérisée en ce que** les fonctions locales et globales peuvent être exécutées par un fonctionnement simultané des modules (10, 10', 10", 10"', 10a, 10b...) selon un programme de fonctionnement identique.

3. Machine selon la revendication 1 ou 2,
**caractérisée en ce que** pour au moins une partie des fonctions globales, une pluralité d'acteurs identiques (8a, 8b, 8c; 9a, 9b) peuvent être utilisés, **en ce que** ces acteurs sont présents en un nombre générateur de redondance et **en ce qu'**il est associé à chacun des acteurs à chaque fois seulement un module (10c, 10d, 10e), où dans le cas d'une défaillance d'un acteur, au moyen des modules correspondants, une adaptation lors du fonctionnement des acteurs intacts peut être provoquée.

4. Machine selon la revendication 1, **caractérisée en ce que** la deuxième zone partielle de fonction (12) du circuit logique d'un premier module (10) est prévue d'une manière appariée avec la deuxième zone partielle de fonction correspondante d'un autre module (10') pour la commande globale du moteur, **en ce que** deux autres modules (10", 10"') sont prévus avec une telle paire de deuxièmes zones partielles de fonction et **en ce que** la commande globale du moteur peut être exécutée d'une manière redondante par un fonctionnement simultané des deux paires (10, 10' et 10", 10"').

5. Machine selon la revendication 4, **caractérisée en ce que** les deux paires (10, 10' et 10", 10"') sont couplées par des deuxièmes zones partielles de fonction (12) à leurs sorties et sont protégées au moyen de composants du circuit logique l'une contre l'autre de sorte que lors d'une défaillance d'un des modules (10'), une poursuite de la commande globale du moteur - sans l'effet du module défaillant (10') - est assurée.

6. Machine selon l'une des revendications 1 à 5, **caractérisée en ce que** tous les modules de commande (10, 10', 10", 10"') sont identiques, **en ce que** les liaisons à des entrées de signaux et sorties de signaux sont établies au moins en partie par des systèmes de conduction de bus redondants et **en ce que**, pour l'intégration des modules dans le système de commande (1), d'autres circuits électroniques ne sont pas requis.

7. Machine selon l'une des revendications 1 à 6, **caractérisée en ce que** dans des modules (10), dont la deuxième zone partielle de fonction (12) du circuit logique n'est pas requise pour la commande globale du moteur, des connections de raccordement correspondantes (123, 124) ou des connections à des sorties discrètes sont absentes.

8. Machine selon l'une des revendications 1 à 7, **caractérisée en ce que** les modules individuels (10) dans le système de commande (1) sont disposés et connectés de façon que pour le remplacement d'un module défectueux (10'), uniquement des interventions de démontage locales à ce module sont à exécuter, et **en ce que** en l'absence d'un module individuel, le système de commande reste fonctionnel.

9. Machine selon l'une des revendications 1 à 8, **caractérisée en ce que** les modules (10) du système de commande (1) sont en liaison de transmission de signaux (100) respectivement avec les composants suivants du moteur:
- un système d'injection (30) pour le cylindre associé (2) pour l'alimentation en combustible liquide (300),
- un système de changement de gaz (20) pour le cylindre associé,
- des pompes (31, 41) pour l'amenée du combustible et d'un milieu de commande (400),
- un accumulateur (43) pour le milieu de commande et un accumulateur (33) pour le combustible, un soi-disant "mail commun", où ces accumulateurs sont reliés aux pompes, aux systèmes d'injection et aux systèmes de changement de gaz,
- un système hydraulique avec des organes pour exécuter l'injection et le changement de gaz,
- une détection d'angle pour la synchronisation des fonctions locales et globales avec la rotation de l'arbre entraîné par le moteur, et
- des dispositifs pour la régulation de l'amenée du combustible et du changement de gaz et pour la commande d'une amenée d'air de démarrage.

10. Utilisation d'une machine selon l'une des revendications 1 à 8, sur un navire de haute mer pour l'entraînement d'un arbre d'entraînement de navire, où les modules de commande (10) présentent des entrées de signaux à travers lesquels ils peuvent recevoir des informations, entre autres d'un système d'alarme de navire (5), d'un système de sécurité et d'un réglage de nombre de tours électronique (6) de l'arbre d'entraînement du navire pour agir sur le système de commande (1).
